# EUROPEAN PATENT SPECIFICATION

(11) **EP 0 372 575 B1**
(45) Date of publication and mention of the grant of the patent: **25.03.1998**
(21) Application number: 89122701.9
(22) Date of filing: 08.12.1989
(51) Int. Cl.: B66B 1/34, G01P 1/04

(54) **Encoder installing structure**
Kodiereinrichtungsstruktur
Structure d'un équipement de codage

(30) Priority: 09.12.1988 JP 311542/88
(43) Date of publication of application: 13.06.1990
(73) Proprietor: OTIS ELEVATOR COMPANY, Farmington, CT 06032 (US)
(72) Inventor: Nakai, Keiichiro, Tokyo (JP); Suganuma, Manabu, Narita-City, Chiba Prefecture (JP)
(74) Representative: Klunker . Schmitt-Nilson . Hirsch

(56) References cited:
- CA-A- 954 718
- US-A- 4 440 024
- MACHINE DESIGN. vol. 53, no. 8, April 1981, CLEVELAND US pages 204 - 205; JOSEPH BITTAR: 'Electronic Controls Cut Elevator Travel Time and Operating Cost, More Precise Power Use'
- MEASUREMENT TECHNIQUES. vol. 19, no. 2, February 1976, NEW YORK US pages 236 - 241; B. I. IVANOV: 'APPLICATION OF THE MEASURING-ROLLER METHOD IN EQUIPMENT MONITORING AND AUTOMATION'

## Description

The present invention relates to an installing structure of an encoder particularly to an installing structure of the encoder to a sheave.

In a so-called traction-type elevator system which rotationary drives the sheave by a motor, thereby to wind up a rope wound on the sheave, there have been known a system in which the encoder for detecting a velocity of the elevator car is installed at the output axis of the motor through a timing belt and the like and the velocity of the elevator car is detected based upon the revolutions per minute of the motor output axis.

However, in the elevator system using a linear motor which has being developed as the driving mechanism a counter weight or the elevator car itself is directly and linearly driven by the linear motor and the sheave onto which the rope is wound up or guided acts as an idler rotationary driven by the rope, therefore, there exists no motor corresponding to that of the traction-type elevator, namely its output axis.

An object of the present invention is, therefore, to provide an installing structure of the encoder capable of determining a necessary data such as the velocity of the moving object based upon the rotational moving quantity of the sheave.

In order to achieve the above object, an encoder installing structure according to the first invention is constructed such that a driving force is provided by a driving means to a rotor arranged on a circumference surface of a sheave to always apply a predetermined normal load to the sheave in a direction toward the axis line of the sheave at a contact portion with the sheave circumference surface.

Subject-matter of the invention is an installing structure of encoder means having a roller contacting the circumferential surface of a sheave, the installing structure comprising:
(a) a support member supporting the roller and being mounted in a pivotable manner;
(b) biasing means acting on the support member so as to exert biasing force urging the roller against the sheave surface;
   **characterized by:**
(c) an arm member supporting the support member by a first hinge and mounted to a base member by a second hinge;
(d) the support member supporting the encoder means including the roller;
(e) the acting point of the biasing force being located in a first plane which includes the axes of the sheave and of the first hinge;
(f) a second plane which includes the axes of the first hinge and of the second hinge;
(g) and the first and second planes intersecting each other.

Further subject-matter of the invention is an elevator system comprising this installing structure.

An installing structure of encoder means according to the preamble of claim 1 and an elevator system according to the preamble of claim 5 are known from CA-A-954 718. The biasing means act in such a way on the support member that a momentum for pivoting the support member relative to the sheave is exerted.

With the installing structure of the encoder means it is possible to determine the velocity of a moving object based upon the rotational speed of the sheave. The rotational speed of the sheave is exactly transmitted to the one roller or to the two rollers.

The installing structure of the encoder means according to the invention is particularly suited for an elevator system having a linear motor drive. In such elevator systems the linear motor drive acts on a counterweight or on the elevator car, and the sheave onto which the rope is guided acts as an idler sheave rotated by the rope. There is no driving motor having an output shaft as in traction-type elevators.

With the invention, the rotor (rotors) of the encoder applies (apply) a predetermined normal load in a direction toward the axis of the sheave at the contact portion(s) with the circumferential surface of the sheave.

Embodiments of the invention will now be described with reference to the attached drawings in which
- Fig. 1: shows a front view of a first preferred embodiment of an encoder installing structure;
- Fig. 2: a side view of the structure shown in Fig. 1;
- Fig. 3: a front view of a second preferred embodiment of an encoder installing structure; and
- Fig. 4: a side view of the structure shown in Fig. 3, with the lower roller removed.

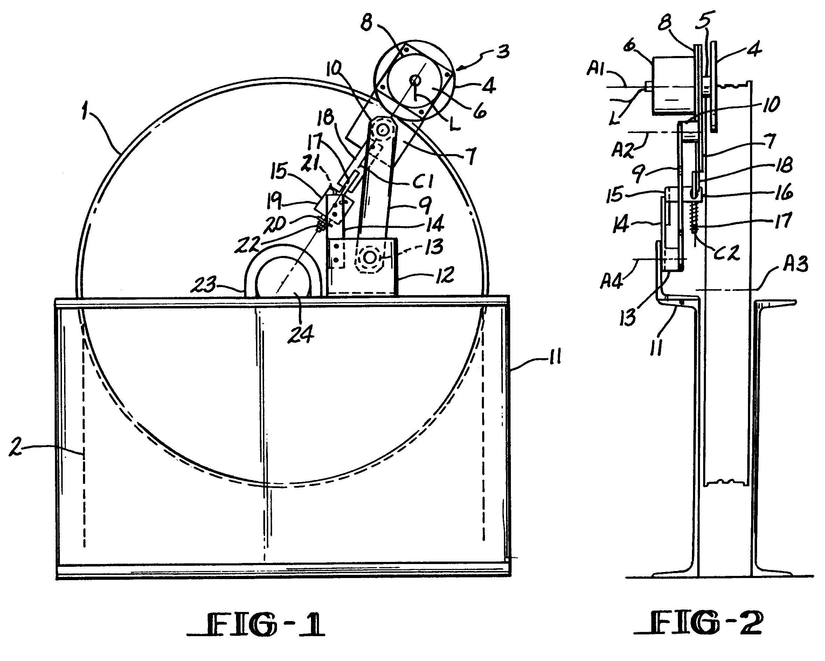

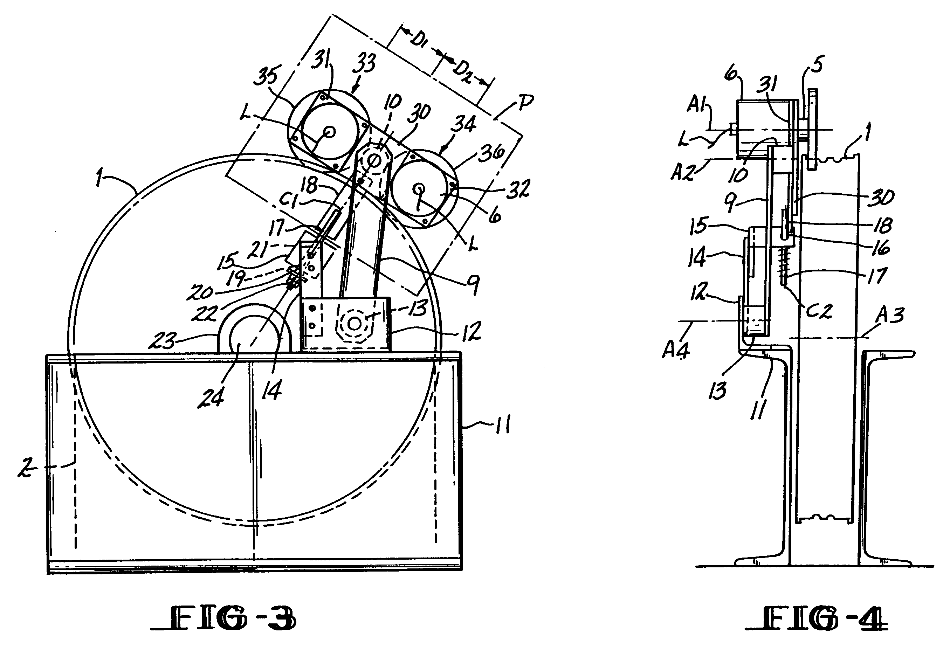

Figs. 1 and 2 show a first preferred embodiment of the present invention. In the drawings, a rope 2 is wound up on a sheave 1 used for a traction-type elevator system. The sheave 1 is rotationally driven by a motor (not shown) to wind up the rope 2. On the other hand, in a linear motor drive-type elevator system, the sheave 1 is an idler and is indirectly rotated by the movement of the rope 2. On the sheave 1, a roller 4 of a velocity detecting encoder 3 is arranged outside of the rope 2 so as to be in contact with the circumferential surface of the sheave 1. The roller 4 is coupled with a signal forming portion 6 so as to be freely rotatable by means of a rotating axis 5. The signal forming portion 6 is fixed to a movable bracket 7 by a bolt and a nut through an installing plate 8. The signal forming portion 6 is connected with a well-known system control apparatus (not shown) through a lead line L. In the movable bracket 7, the encoder end or upper end of a plate arm member 9 for rotating the movable bracket 7 is hinged at the lower portion of the signal forming portion 6. The movable bracket 7 is constructed so as to be freely movable around the hinged portion 10 relative to the arm member 9. Similarly, the lower end of the arm member 9 is hinged to a fixing bracket 12 installed at a fixing portion 11 through a hinged portion 13, and the arm member 9 is constructed so as to be freely movable relative to the fixing bracket 12. It is to be noted here that as the construction of the hinged portions 10 and 13 arbitrary well-known structures, such as mounting structures, may be employed instead of the hinged portions 10 and 13.

To the fixing bracket 12 the lower end portion of an auxiliary bracket 14 is also fixed by bolts and nuts. In one surface of an approximately L-shaped bracket 15 an oval hole is made and a rod 17 is movably inserted through the oval hole. The upper end of the rod 17 is fixed to the lower end of a plate connecting member 18 by welding. The upper end of the connecting member 18 is fixed with the movable bracket 7 through bolt and nut. At the lower portion of the rod 17 which is inserted through the oval hole a compressed coil spring 19 is provided through spring sheets 20 and 21 between the lower portion of the other surface of approximately L-shaped bracket 15 and the lower end of the rod 17. The spring sheet 20 of the lower side is fixedly placed by a double nut 22 through washer.

Here, the apparatus is so constructed to place the axis lines A1 and A2 of the motor and of the hinged portion 10, the central lines C1 and C2 of the connecting member 18 and of the rod 17 in the same plane.

A U-shaped member 23 provided at the fixing portion 11 fixes a shaft 24 to the fixing portion 11. The shaft 24 is equipped with the sheave 1 which is rotationally movable.

For arranging the roller 4 of the encoder 3 at the circumferential surface of the sheave 1, first the arm member 9 and the movable bracket 7 are rotated while the spring 19 is free. At this time, the installed portion of the rod 17 becomes movable inside of the oval hole 16. Then, the spring 19 is compressed by the nuts 22 and 23 to give a predetermined biasing force when the axis line A3 of the sheave 1 or the shaft 24 is located on a plane including axis lines A1,A2 and central lines C1,C2.

As a result, the roller 4 of the encoder 3 always applies a predetermined normal load to the sheave 1 at the contact portion with the circumferential surface of the sheave 1, realizing exact transmission of the rotational moving speed.

It is needless to say here that the plane including the axis lines A1 , A3 and the central lines C1,C2 and the plane including the axis lines A2 and A4 of the hinged portions 10 and 13 are mutually crossed.

Furthermore, needless to say that although in the above embodiment there have been described the encoder as the encoder for detecting the velocity, the present invention may apply to other encoders for detecting data in a similar manner.

Figs. 3 and 4 represent a second preferred embodiment. In the drawings, the same members as those in the first embodiment are denoted by same symbols and the explanation thereof is omitted here.

In this embodiment, there is shown an encoder installing structure equipped with two encoders. At both ends of a movable bracket 30, encoders 33,34 are respectively installed through installing plates 31,32 in the same manner as in the first embodiment. The arm member 9 is installed at the movable bracket 30 between rollers 35 and 36 in a similar manner as in the first embodiment. Moreover, the connecting member 18 is installed at the movable bracket 30 in the lower side of the hinged portion 10 between the movable bracket 30 and the arm member 9 in a similar manner as in the first embodiment.

Here, a first plane including the central lines C1 and C2 of the connecting member 18 and of the rod 17 and a second plane including the axis lines A1,A1 of the rollers 35,36 are orthogonally crossed. The axis line A2 of the hinged portion 10 is located in the first plane. Further, on the plane P orthogonally crossed with the axis lines A1,A1 of the rollers 35,36 and with the axis line A2 of the hinged portion 10, the construction is such that the distance D1 between points on the lines A1 and A2 of the roller 35 and distance D2 between points on the lines A1 and A2 of the roller 36 are the same.

It is to be noted here that in this embodiment the axis line A2 of the hinged portion 10 is also constructed to be located in the second plane; however, this is not always necessary and the object of the present invention may be realized by merely locating it in the first plane.

The method of arranging the rollers 35 and 36 of the encoders 33 and 34 on the circumferential surface of the sheave 1 is almost the same as in the first embodiment, so that a predetermined biasing force is given by compressing the spring 19 through the nuts 22,22 when the axis line A3 is located in the first plane.

According to such construction, the rollers 35 and 36 always apply predetermined uniform normal loads in a direction towards the axis line A3 of the sheave 1 at the respective contact portions with the circumferential surface of the sheave 1, resulting in exact transmission of the rotational moving speed of the sheave 1 to the respective rollers 35,36.

Needless to say here, it is constructed such that the first plane including the axis A3 of the sheave 1 and the plane including the axis lines A2 and A4 of the hinged portions 10 and 13 are mutually crossed.

According to the first embodiment, the roller of the encoder applies a predetermined normal load to the sheave in the direction toward the axis line of thee sheave, realizing the exact transmission of the rotational moving speed to the roller.

According to the second embodiment, the plural rollers of the encoder always apply a predetermined uniform normal load of substantially the same value to the sheave in the direction toward the axis of the sheave, resulting in exact transmission of the rotational moving speed of the sheave to the respective rollers.

## Claims

1. An installing structure of encoder means (3;33,34) having a roller (4;35;36) contacting the circumferential surface of a sheave (1), the installing structure comprising:
(a) a support member (7;30) supporting the roller (4;35;36) and being mounted in a pivotable manner;
(b) biasing means (19) acting on the support member (7;30) so as to exert biasing force urging the roller (4;35;36) against the sheave surface;
**characterized by:**
(c) an arm member (9) supporting the support member (7;30) by a first hinge (10) and mounted to a base member (12) by a second hinge (13);
(d) the support member (7;30) supporting the encoder means (3;33,34) including the roller (4;35;36);
(e) the acting point of the biasing force being located in a first plane which includes the axes (A3,A2) of the sheave (1) and of the first hinge (10);
(f) a second plane which includes the axes (A2,A4) of the first hinge (10) and of the second hinge (13);
(g) and the first and second planes intersecting each other.

2. The installing structure of claim 1, wherein the encoder means (33,34) comprise two rollers (35,36), contacting the circumferential surface of the sheave (1), and two signal forming portions (6).

3. The installing structure of claim 2, wherein the distance (D1) between the axes of one of the rollers (35) and of the first hinge (10) is substantially the same as the distance (D2) between the axes of the other of the rollers (36) and of the first hinge (10).

4. The installing structure of any one of claims 1 to 3, wherein the biasing means comprise a spring (19).

5. An elevator system which comprises a sheave (1), encoder means (3;33,34) having a roller (4;35;36) contacting the circumferential surface of the sheave (1), and an installing structure of the encoder means (3; 33, 34), said structure comprising:
(a) a support member (7;30) supporting the roller (4;35;36) and being mounted in a pivotable manner;
(b) biasing means (19) acting on the support member (7;30) so as to exert biasing force urging the roller (4;35;36) against the sheave surface;
**characterized by:**
(c) an arm member (9) supporting the support member (7;30) by a first hinge (10) and mounted to a base member (12) by a second hinge (13);
(d) the support member (7;30) supporting the encoder means (3;33,34) including the roller (4;35;36);
(e) the acting point of the biasing force being located in a first plane which includes the axes (A3,A2) of the sheave (1) and of the first hinge (10);
(f) a second plane which includes the axes (A2,A4) of the first hinge (10) and of the second hinge (13);
(g) and the first and second planes intersecting each other.

6. The elevator system of claim 5, wherein the encoder means (33,34) comprise two rollers (35,36), contacting the circumferential surface of the sheave (1), and two signal forming portions (6).

7. The elevator system of claim 6, wherein the distance (D1) between the axes of one of the rollers (35) and of the first hinge (10) is substantially the same as the distance (D2) between the axes of the other of the rollers (36) and of the first hinge (10).

8. The elevator system of any one of claims 5 to 7, wherein the biasing means comprise a spring (19).

9. The elevator system of any one of claims 5 to 8,
wherein the elevator system comprises a linear motor drive.

10. The elevator system of any one of claims 5 to 9,
wherein the encoder means (3;33,34) determine the velocity of the elevator car.

## Patentansprüche

1. Eine Anbauanordnung einer Kodiereinrichtung (3; 33, 34) mit einer Rolle (4; 35; 36), welche die Umfangsfläche einer Seilscheibe (1) berührt, wobei die Anbauanordnung aufweist:
(a) ein Tragelement (7; 30), welches die Rolle (4; 35; 36) trägt und drehbar angebracht ist;
(b) eine Vorspanneinrichtung (19), welche an dem Tragelement (7; 30) so angreift, daß eine Vorspannkraft ausgeübt wird, welche die Rolle (4; 35; 36) gegen die Seilscheibenfläche drängt;
gekennzeichnet durch folgende Merkmale:
(c) ein Armelement (9), welches das Tragelement (7; 30) durch ein erstes Gelenk (10) tragt und an einem Basiselement (12) durch ein zweites Gelenk (13) angebracht ist;
(d) das Tragelement (7; 30) trägt die Kodiereinrichtung (3; 33, 34), welche die Rolle (4; 35; 36) enthält;
(e) der Angriffspunkt der Vorspannkraft ist in einer ersten Ebene angeordnet, welche die Achse (A3) der Seilscheibe (1) und die Achse (A2) des ersten Gelenks (10) enthält;
(f) eine zweite Ebene, welche die Achse (A2) des ersten Gelenks (10) und die Achse (A4) des zweiten Gelenks (13) enthält; und
(g) die erste Ebene und die zweite Ebene schneiden einander.

2. Die Anbauanordnung nach Anspruch 1, bei welcher die Kodiereinrichtung (33, 34) zwei Rollen (35, 36), welche die Umfangsfläche der Seilscheibe (1) berühren, und zwei signalformende Bereiche (6) aufweist.

3. Die Anbauanordnung nach Anspruch 2, bei welcher der Abstand (D1) zwischen den Achsen der einen der Rollen (35) und des ersten Gelenks (10) in, wesentlichen der gleiche wie der Abstand (D2) zwischen den Achsen der anderen der Rollen (36) und des ersten Gelenks (10) ist.

4. Die Anbauanordnung nach einem der Ansprüche 1 bis 3, bei welcher die Vorspanneinrichtung eine Feder (19) aufweist.

5. Ein Aufzugsystem, welches eine Seilscheibe (1), eine Kodiereinrichtung (3; 33, 34) mit einer Rolle (4; 35; 36), welche die Umfangsfläche der Seilscheibe (1) berührt, und eine Anbauanordnung der Kodiereinrichtung (3; 33, 34) aufweist, wobei diese Anordnung aufweist:
(a) ein Tragelement (7; 30), welches die Rolle (4; 35; 36) trägt und drehbar angebracht ist;
(b) eine Vorspanneinrichtung (19), welche an dem Tragelement (7; 30) so angreift, daß eine Vorspannkraft ausgeübt wird, welche die Rolle (4; 35; 36) gegen die Seilscheibenfläche drängt;
gekennzeichnet durch folgende Merkmale:
(c) ein Armelement (9), welches das Tragelement (7; 30) durch ein erstes Gelenk (10) trägt und an einem Basiselement (12) durch ein zweites Gelenk (13) angebracht ist;
(d) das Tragelement (7; 30) tragt die Kodiereinrichtung (3; 33, 34), welche die Rolle (4; 35; 36) enthält;
(e) der Angriffspunkt der Vorspannkraft ist in einer ersten Ebene angeordnet, welche die Achsen (A3) der Seilscheibe (1) und die Achse (A2) des ersten Gelenks (10) enthält;
(f) eine zweite Ebene, welche die Achse (A2) des ersten Gelenks (10) und die Ache (A4) des zweiten Gelenks (13) enthält; und
(g) die erste Ebene und die zweite Ebene schneiden einander.

6. Das Aufzugsystem nach Anspruch 5, bei welchem die Kodiereinrichtung (33, 34) zwei Rollen (35, 36), welche die Umfangsfläche der Seilscheibe (1) berühren, und zwei signalformende Bereiche (6) aufweist.

7. Das Aufzugsystem nach Anspruch 6, bei welchem der Abstand (D1) zwischen den Achsen der einen der Rollen (35) und des ersten Gelenks (10) im wesentlichen der gleiche wie der Abstand (D2) zwischen den Achsen der anderen der Rollen (36) und des ersten Gelenks (10) ist.

8. Das Aufzugsystem nach einem der Ansprüche 5 bis 7, bei welchem die Vorspanneinrichtung eine Feder (19) aufweist.

9. Das Aufzugsystem nach einem der Ansprüche 5 bis 8, bei welchem das Aufzugsystem einen Linearmotorantrieb aufweist.

10. Das Aufzugsystem nach einem der Ansprüche 5 bis 9, bei welchem die Kodiereinrichtung (3; 33, 34) die Geschwindigkeit des Aufzugwagens bestimmt.

## Revendications

1. Structure de montage de moyens de codage (3 ; 33,34) ayant un rouleau (4 ; 35 ; 36) venant en contact avec la surface circonférentielle d'une poulie (1), la structure de montage comprenant :
(a) un élément de support (7 ; 30) supportant le rouleau (4 ; 35 ; 36) et étant monté de manière à pouvoir pivoter ;
(b) des moyens de poussée (19) agissant sur l'élément de support (7 ; 30) de façon à exercer une force de poussée pressant le rouleau (4 ; 35 ; 36) contre la surface de la poulie ;
caractérisée par :
(c) un élément formant bras (9) supportant l'élément de support (7 ; 30) par une première articulation (10) et monté sur un élément formant base (12) par une seconde articulation (13) ;
(d) l'élément de support (7 ; 30) supportant les moyens de codage (3 ; 33,34) incluant le rouleau (4 ; 35 ; 36) ;
(e) le point d'action de la force de poussée étant situé dans un premier plan qui comprend les axes (A3, A2) de la poulie (1) et de la première articulation (10) ;
(f) un second plan qui comprend les axes (A2, A4) de la première articulation (10) et de la seconde articulation (13) ;
(g) et les premier et second plans se coupant l'un l'autre.

2. Structure de montage selon la revendication 1, dans laquelle les moyens de codage (33, 34) comprennent deux rouleaux (35, 36), venant en contact avec la surface circonférentielle de la poulie (1), et deux parties de formation de signal (6).

3. Structure de montage selon la revendication 2, dans laquelle la distance (D1) entre les axes d'un des rouleaux (35) et de la première articulation (10) est sensiblement la même que la distance (D2) entre les axes de l'autre des rouleaux (36) et de la première articulation (10).

4. Structure de montage selon l'une quelconque des revendications 1 à 3, dans laquelle les moyens de poussée comprennent un ressort (19).

5. Système d'ascenseur qui comprend une poulie (1), des moyens de codage (3 ; 33, 34) ayant un rouleau (4 ; 35 ; 36) venant en contact avec la surface circonférentielle de la poulie (1), et une structure de montage des moyens de codage (3 ; 33, 34), ladite structure comprenant :
(a) un élément de support (7 ; 30) supportant le rouleau (4 ; 35 ; 36) et étant monté de manière à pouvoir pivoter ;
(b) des moyens de poussée (19) agissant sur l'élément de support (7 ; 30) de façon à exercer une force de poussée pressant le rouleau (4 ; 35 ; 36) contre la surface de la poulie ;
caractérisée par :
(c) un élément formant bras (9) supportant l'élément de support (7 ; 30) par une première articulation (10) et monté sur un élément formant base (12) par une seconde articulation (13) ;
(d) l'élément de support (7 ; 30) supportant les moyens de codage (3 ; 33, 34) incluant le rouleau (4 ; 35 ; 36) ;
(e) le point d'action de la force de poussée étant situé dans un premier plan qui comprend les axes (A3, A2) de la poulie (1) et de la première articulation (10) ;
(f) un second plan qui comprend les axes (A2, A4) de la première articulation (10) et de la seconde articulation (13) ;
(g) et les premier et second plans se coupant l'un l'autre.

6. Système d'ascenseur selon la revendication 5, dans lequel les moyens de codage (33, 34) comprennent deux rouleaux (35, 36), venant en contact avec la surface circonférentielle de la poulie (1), et deux parties de formation de signal (6).

7. Système d'ascenseur selon la revendication 6, dans lequel la distance (D1) entre les axes d'un des rouleaux (35) et de la première articulation (10) est sensiblement la même que la distance (D2) entre les axes de l'autre des rouleaux (36) et de la première articulation (10).

8. Système d'ascenseur selon l'une quelconque des revendications 5 à 7, dans lequel les moyens de poussée comprennent un ressort (19).

9. Système d'ascenseur selon l'une quelconque des revendications 5 à 8, dans lequel le système d'ascenseur comprend un entraînement par moteur linéaire.

10. Système d'ascenseur selon l'une quelconque des revendications 5 à 9, dans lequel les moyens de codage (3 ; 33,34) déterminent la vitesse de la cabine d'ascenseur.
